# FASCICULE DE BREVET EUROPEEN

(11) **EP 2 242 921 B1**
(45) Date de publication et mention de la délivrance du brevet: **11.07.2012**
(21) Numéro de dépôt: 08872345.7
(22) Date de dépôt: 21.11.2008
(51) Int. Cl.: F02K 1/09, F02K 1/16, F02K 1/72, F02K 1/76, B64D 29/00

(54) **SYSTEME DE COMMANDE POUR NACELLE DE TURBOREACTEUR**
STEUERSYSTEM FÜR EINE TURBOSTRAHL-TRIEBWERKSGONDEL
CONTROL SYSTEM FOR TURBOJET ENGINE NACELLE

(30) Priorité: 13.02.2008 FR 0800772
(43) Date de publication de la demande: 27.10.2010
(73) Titulaire: Aircelle, 76700 Gonfreville l'Orcher (FR)
(72) Inventeur: KUBIAK, Benoît, F-62138 Haisnes (FR)
(74) Mandataire: Gaillarde, Frédéric F. Ch.
(86) Numéro de dépôt international: PCT/FR2008/001633
(87) Numéro de publication internationale: WO 2009/101274

(56) Documents cités:
- WO-A-2005/026518
- FR-A- 2 902 839

## Description

La présente invention se rapporte à une nacelle de turboréacteur comprenant une source d'alimentation électrique d'un système d'actionnement et de commande d'un dispositif d'inversion de poussée et d'un système d'actionnement et de commande d'un dispositif de tuyère variable.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système électro- ou <hydromécanique d'actionnement de manoeuvre de tuyère variable. Ils peuvent également comprende un système électro- ou hydromécanique d'actionnement de manoeuvre d'un inverseur de poussée et un système d'actionnement de capotages destinés à permettre des opérations de maintenance sur le turboréacteur.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur permet de renvoyer vers l'avant de la nacelle tout ou partie des flux de gaz éjectés par le turboréacteur, générant de ce fait une contre-poussée qui vient s'ajouter au freinage des roues de l'avion. Pour ce faire, un inverseur de poussée comprend de part et d'autre de la nacelle un capot mobile déplaçable entre, d'une part, une position déployée qui ouvre dans la nacelle un passage destiné au flux dévié lors d'une phase de freinage, et d'autre part, une position d'escamotage qui ferme ce passage lors du fonctionnement normal du turboréacteur ou lorsque l'avion est à l'arrêt.

Actuellement ces systèmes d'actionnement sont principalement mis en oeuvre par des vérins hydrauliques ou pneumatiques. Ces vérins nécessitent un réseau de transport d'un fluide sous pression obtenu soit par piquage d'air sur le turboréacteur soit par prélèvement sur le circuit hydraulique de l'avion. Cependant, de tels systèmes sont encombrants et requièrent une maintenance importante car la moindre fuite dans le réseau hydraulique ou pneumatique peut avoir des conséquences dommageables tant sur l'inverseur que sur d'autres parties de la nacelle. Par ailleurs, les vérins hydrauliques ou pneumatiques délivrent toujours la puissance maximale disponible, ce qui entraîne une usure prématurée des équipements.

Pour pallier les inconvénients liés aux systèmes pneumatiques et hydrauliques, les constructeurs et équipementiers de nacelles ont cherché à les remplacer et à utiliser au maximum des systèmes d'actionnement électriques de manière à alléger la nacelle et à en simplifier le fonctionnement, notamment au niveau des cycles de maintenance nécessaires et de la gestion des fluides hydrauliques ou pneumatiques. Il existe déjà certains capotages de nacelles destinés à la maintenance du turboréacteur qui sont actionnées par des vérins électriques, et un inverseur de poussée actionné électriquement est décrit dans le document EP 0 843 089.

Les systèmes d'actionnement électriques permettent une gestion optimale de l'énergie en fonction de la puissance réellement nécessaire au fonctionnement de ces systèmes tout en occupant moins d'espace dans la nacelle et en ne requérant pas de circuit de circulation de fluide sous pression. Ils permettent également d'intégrer des systèmes de commande et de pilotages électroniques, tels que décrit par exemple dans les documents FR 2872222 et FR 2912470.

La réglementation aéronautique (FAR-JAR 25-933) demande une protection des systèmes de commande des inverseurs de poussée contre les risques de déploiement intempestif par la mise en place d'un système de verrouillage triple des organes de commande de l'inverseur de poussée dont la commande droit être ségréguée.

Dans le cas d'un système à commande hydraulique tel qu'existant sur l'A340-500/600 ; chaque capot mobile d'inverseur dispose d'un verrou tertiaire piloté électriquement par un dispositif indépendant, et de deux verrous dits primaires installés dans les vérins supérieur et inférieur dont la commande à action hydraulique est permise par un pilotage conjoint d'une première vanne et d'une deuxième vanne de fermeture du circuit hydraulique d'alimentation des vérins. Le pilotage des deux vannes s'effectue par deux lignes de pilotage parfaitement ségréguées.

Dans les conditions de vol, la première vanne reste fermée et la puissance hydraulique n'est donc pas disponible pour permettre un éventuel déverrouillage des verrous primaires par la deuxième vanne seule.

Dans le cas d'un système électrique d'actionnement d'un inverseur de poussée, la commande de mouvement du levier d'inversion de poussée est tout d'abord capturée par un ensemble de calculateurs ségrégués.

Un premier calculateur est destiné à commander uniquement le déverrouillage du verrou tertiaire, qui reste donc commandé par une ligne de commande dédiée.

La commande de chaque verrou primaire est autorisée depuis une unité de commande recevant, d'une part, l'alimentation électrique nécessaire commandée par un deuxième calculateur et un ordre d'ouverture en provenance d'un calculateur du turboréacteur (FADEC ou EEC).

Ainsi, lorsque le pilote commande l'ouverture de l'inverseur de poussée, cet ordre est capturé :
- par le premier calculateur qui commande alors l'ouverture du verrou tertiaire,
- par le deuxième calculateur qui autorise alors l'alimentation électrique des systèmes de commande des verrous primaires
- par le calculateur du turboréacteur qui, en fonction de paramètres de fonctionnement du turboréacteur qui sont représentatifs des phases de vol, autorise ou non l'ouverture.

On comprend donc qu'un problème électronique touchant la commande du verrou tertiaire ne permettrait pas le déverrouillage des verrous primaires puisque cette ligne de commande en est totalement indépendante.

Un problème électronique sur le calculateur du turboréacteur ne permettrait pas non plus à lui seul une ouverture intempestive de l'inverseur de poussée puisqu'en l'absence d'un ordre du deuxième calculateur, aucune puissance électrique n'est disponible.

Réciproquement, en cas d'erreur du deuxième calculateur permettant l'alimentation électrique des systèmes de commande des verrous primaires, ceux-ci ne s'ouvriraient pas puisqu'il manquerait à ces systèmes de commande l'ordre provenant du calculateur moteur.

Les premier et deuxième calculateurs utilisent généralement des données de l'avion non liées au moteur, notamment par exemple, une donnée altimétrique, une donnée représentative du poids s'exerçant sur les roues du train d'atterrissage ou autre.

Le troisième calculateur, le calculateur moteur, utilise quant à lui des données représentatives du régime de fonctionnement du turboréacteur.

Une telle architecture du système de sécurité de l'inverseur de poussée pose problème lorsque l'on souhaite regrouper sur une même source d'alimentation électrique plusieurs fonctionnalités utilisées en vol et plus particulièrement une fonctionnalité de tuyère variable. L'intérêt de regrouper plusieurs fonctionnalités sur une même source d'alimentation électrique est évident. Cela évite d'encombrer, et d'alourdir la nacelle avec des systèmes d'alimentation électriques dédiés pour chaque fonctionnalité.

Ces deux systèmes, inverseur de poussée et tuyère variable, possèdent des moments de fonctionnement différents, à savoir respectivement en phase d'atterrissage et en phase de vol de croisière, au cours desquels le turboréacteur est en fonctionnement.

Ainsi, la puissance d'alimentation électrique délivrée au système de commande de la nacelle ne peut plus servir de test de sécurité discriminant puisque la source d'alimentation électrique est susceptible de délivrer du courant électrique dans une phase d'utilisation de l'avion qui ne concerne pas l'inverseur de poussée. L'alimentation électrique ne sert donc plus à elle seule de ligne de défense.

Plus précisément, le test opéré par le deuxième calculateur serait validé en permanence, la sortie des unités de commande des verrous primaires serait donc réduite à l'ordre en provenance du calculateur moteur.

Il convient donc de restaurer cette troisième ligne de défense de manière à pouvoir satisfaire aux normes de sécurité aérienne.

Pour ce faire, la présente invention se rapporte à une nacelle de turboréacteur comprenant une source d'alimentation électrique d'un système d'actionnement et de commande d'un dispositif d'inversion de poussée et d'un système d'actionnement et de commande d'un dispositif de tuyère variable, caractérisé en ce que l'alimentation électrique est commutable entre une première position dans laquelle elle alimente le système d'actionnement et de commande de l'inverseur et un deuxième position dans laquelle elle alimente le système d'actionnement et de commande de la tuyère variable, la commutation s'effectuant sous l'action d'une sortie de commande d'un calculateur apte à recevoir une commande d'ouverture de l'inverseur de poussée.

Ainsi, en prévoyant une alimentation commutable entre les deux systèmes d'actionnement et de commande sous l'action d'un contrôleur recevant un ordre de déploiement, l'alimentation électrique peut-être dirigée vers l'un ou l'autre des systèmes en fonction des phases de vol. Dans ce cas, lorsque qu'un système d'actionnement et de commande est alimenté électriquement, l'autre système ne l'est pas, ce qui restaure la ligne de sécurité sur l'alimentation électrique.

De manière préférentielle, en l'absence d'une commande d'ouverture d'inversion de poussée et d'une sortie correspondante du calculateur, l'alimentation électrique est dirigée vers le système d'actionnement et de commande de la tuyère variable.

Avantageusement, le calculateur est apte à recevoir des données représentatives de la phase de fonctionnement de l'avion du type poids s'exerçant sur les roues ou donnée altimétrique, par exemple.

De manière préférentielle, le système d'actionnement et de commande d'inversion de poussée comprend au moins deux verrous primaires associés à au moins une unité de commande apte à commander le déverrouillage des verrous primaires lorsque l'alimentation électrique est dirigée vers le système de d'actionnement et de commande de l'inverseur de poussée et lorsqu'il reçoit un ordre d'ouverture correspondant en provenance d'un deuxième calculateur apte à recevoir une commande d'ouverture de l'inverseur de poussée.

Avantageusement, le deuxième calculateur est un calculateur apte à recevoir des données représentatives du fonctionnement du turboréacteur.

Avantageusement encore, le deuxième calculateur est le FADEC.

Préférentiellement, le système d'actionnement et de commande de l'inverseur de poussée comprend un troisième calculateur distinct apte à recevoir une commande d'ouverture de l'inverseur de poussée et à envoyer une sortie de commande correspondante commandant l'alimentation électrique d'un verrou tertiaire en vue de son déverrouillage.

Avantageusement, l'alimentation électrique du verrou tertiaire s'effectue à partir d'une ligne d'alimentation distincte de la source d'alimentation principale des systèmes d'actionnement et de commande de l'inverseur de poussée et de la tuyère variable.

De manière avantageuse, les systèmes d'actionnement et de commande de l'inverseur de poussée et de la tuyère variable sont principalement logés dans au moins deux boîtiers distincts.

Avantageusement source d'alimentation principale des systèmes d'actionnement de la tuyère variable est mise à disposition d'autres fonctions annexes de la nacelles telles que la manoeuvre de capots de maintenance.

Avantageusement encore, la nacelle comprend deux sources d'alimentation principales aptes à être utilisées de manière sélective en fonction de leur disponibilité vers au moins trois fonctions annexes parmi le système d'actionnement de la tuyère variable, de 'inverseur de poussée et des capots de maintenance.

La mise en oeuvre de l'invention sera mieux comprise à l'aide de la description détaillée qui est exposée ci-dessous en regard du dessin annexé.
La figure 1 est une vue partielle schématique en coupe longitudinale d'une nacelle de turboréacteur équipée d'un inverseur de poussée et présentant une fonctionnalité de tuyère variable.
La figure 2 représente schématiquement un système de sécurité selon l'art antérieur pour une nacelle ne possédant pas de fonctionnalité tuyère variable.
La figure 3 représente schématiquement un système de sécurité selon l'invention pour une nacelle comprenant un inverseur de poussée et une fonctionnalité de tuyère variable.
La figure 4 illustre schématiquement une alimentation électrique commutable.

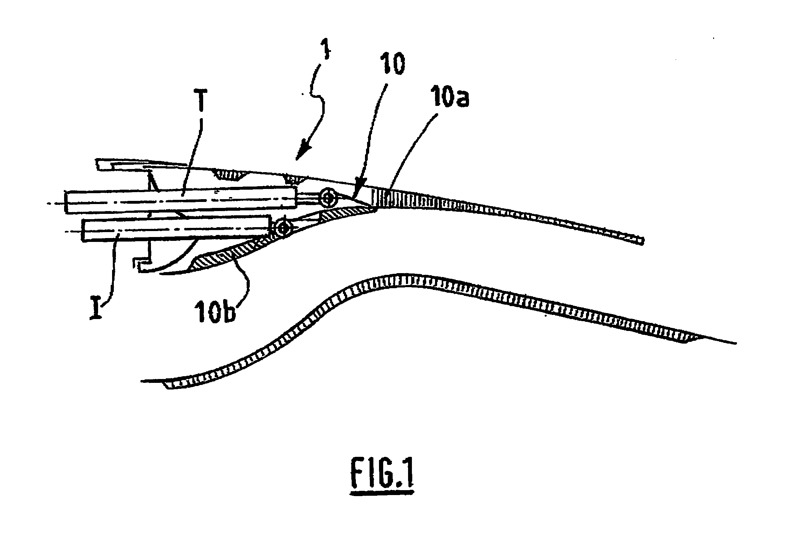

Une nacelle selon l'invention telle que représentée partiellement sur la figure 1 est équipée d'un dispositif d'inversion de poussée 1 et présente une fonctionnalité de tuyère variable.

L'inverseur de poussée 1 comprend, d'une part, des grilles de déviation (non visibles) d'au moins une partie d'un flux d'air du turboréacteur, et d'autre part, au moins un capot mobile 10 en translation selon une direction sensiblement longitudinale de la nacelle apte à passer alternativement d'une position de fermeture dans laquelle il assure la continuité aérodynamique de la nacelle et couvre les grilles de déviation, à une position d'ouverture dans laquelle il ouvre un passage dans la nacelle et découvre les grilles de déviation.

Chaque capot mobile 10 comprend une partie externe 10a et une partie interne 10b montées chacune mobile en translation et reliées chacun à au moins un vérin d'actionnement T, I électrique apte à permettre leur translation longitudinale. La partie externe du capot mobile forme ainsi une tuyère d'éjection à section variable pouvant être actionnée par le vérin d'actionnement T.

Plus précisément, une nacelle possède généralement deux tels capots mobiles 10 couvrant chacun sensiblement une demi-partie de la nacelle et actionnés chacun par trois actionneurs électriques I1, 12, 13 pour la fonction inversion de poussée. Les actionneurs électriques supérieurs et inférieurs de chaque capot mobile 10 sont associés à des moyens de verrouillage dits primaires 50. Le capot mobile 10 est quant à lui associé à un moyen de verrouillage dit tertiaire 60 généralement monté à proximité d'un rail de guidage de ce dernier.

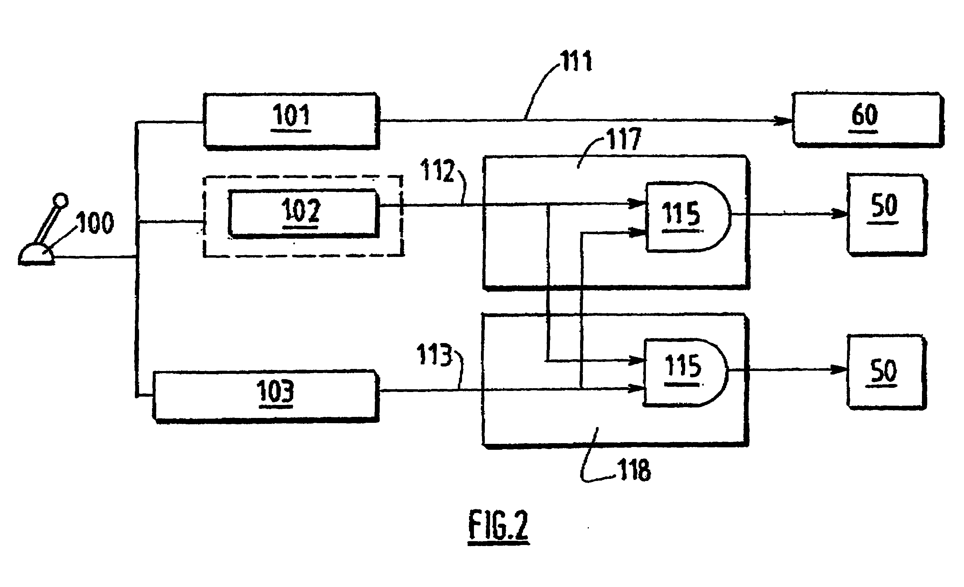

Un système de commande équipant une nacelle ne présentant pas de fonctionnalité de tuyère variable est schématiquement représenté sur la figure 2.

Dans une telle configuration, un ordre d'ouverture de l'inverseur de poussée donné par l'action du pilote sur une manette 100 est capté par trois calculateurs 101, 102, 103.

Un premier calculateur 101 est destiné à commander l'ouverture du verrou tertiaire 60 selon une ligne de commande 111 dédiée totalement distincte.

Un deuxième calculateur 102 est destiné à commander l'ouverture des verrous primaires 50 et renvoie pour ce faire un ordre correspondant le long d'une ligne de commande 112.

Un troisième calculateur 103 est destiné à commander l'alimentation électrique haute puissance du système d'inversion de poussée 1 et est distribuée aux verrous primaires selon une ligne 113.

Plus particulièrement, le deuxième calculateur 102 est un calculateur avion du turboréacteur connu sous le nom de FADEC (ou EEC).

La ligne d'alimentation électrique 113 et la ligne de commande 112 constitue des données d'entrée pour une unité de commande 115 de chaque verrou primaire logé dans des boîtiers de contrôle 117, 118 distincts, chaque unité de commande 115 n'ordonnant le déverrouillage du verrou primaire 50 correspondant que si les conditions d'alimentation électrique et les conditions d'ordre de déploiement sont satisfaites ; à savoir que la ligne 113 délivre bien une alimentation électrique adéquate et que la ligne de commande 112 délivre bien un ordre d'ouverture.

Ainsi, le système d'actionnement et de contrôle de l'inverseur de poussée 1 possède bien trois lignes de défense contre d'éventuelles défaillances.

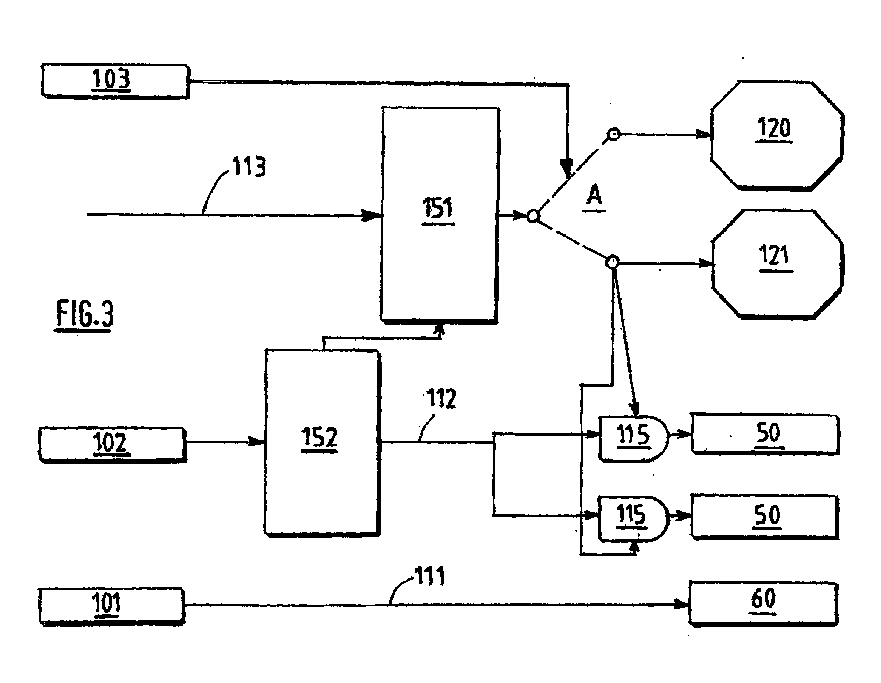

Un système de commande équipant une nacelle présentant une fonctionnalité de tuyère variable est schématiquement représenté sur la figure 3.

Un tel système se distingue du système de la figure principalement en ce que le troisième calculateur 103 commande un interrupteur A permettant une commutation de la ligne d'alimentation électrique 113 soit vers le système d'actionnement et de commande 120 de la tuyère variable et les vérins électriques T1, T2, T3, soit vers le système d'actionnement et de commande de l'inverseur de poussée 1, comprenant un système d'actionnement 121 des vérins électriques I1, 12, 13.

On notera également que la ligne d'alimentation électrique 113 et la ligne de commande 112 traversent respectivement un boîtier de contrôle moteur 151, permettant de contrôler l'alimentation électrique en fonction d'une logique de commande, la puissance électrique nécessaire n'étant pas nécessairement identique pour chaque fonctionnalité, et d'un boîtier de contrôle et de surveillance 152, permettant la mise en oeuvre d'un logique de commande en fonction de paramètres du turboréacteur délivrés par le FADEC 102 et communiquant avec le boîtier de contrôle de l'alimentation électrique.

Grâce à l'invention, la ligne de défense constituée par l'alimentation électrique est restaurée. La nacelle peut ainsi être équipée d'une tuyère variable et d'un dispositif d'inversion de poussée qui seront alimentés électriquement par une même source d'alimentation électrique.

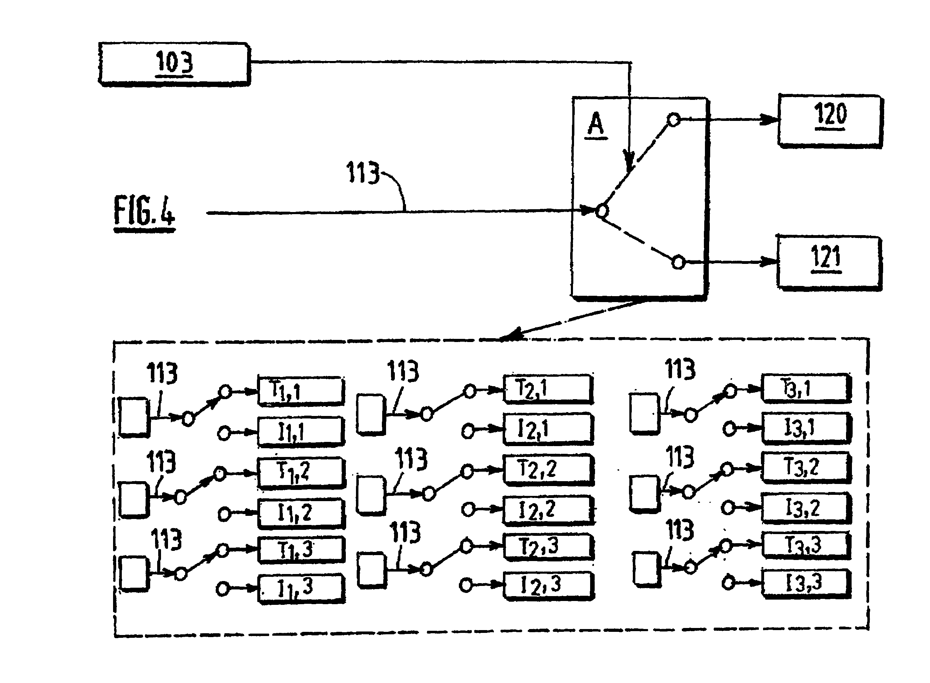

La figure 4 est une représentation schématique d'une possibilité de mise en oeuvre de l'interrupteur commutable A entre le système d'actionnement et de contrôle de la tuyère variable (trois vérins électriques moteurs) et le système d'actionnement et de contrôle du dispositif d'inversion de poussée (trois vérins électriques).

En l'espèce, chaque vérin électrique d'actionnement de la tuyère T1, T2, T3 et chaque vérin électrique d'actionnement de l'inverseur I1, 12, 13 correspondant sont équipés d'un interrupteur commutable apte à basculer sous l'effet d'un ordre en provenance de la ligne de commande 112 entre une position permettant l'alimentation des vérins électriques T1, T2, T3 et une position permettant l'alimentation des vérins électriques I1, I2, I3 associés. La figure 4 représente les interrupteurs en position d'alimentation des vérins électriques de tuyère. Chaque vérin électrique T1, T2, T3, I1, 12, I3 étant alimenté en courant triphasé, on a donc neuf interrupteurs commandables alimentant respectivement les alimentations de phase T1,1 ou I1,1 ; T1,2 ou I1,2 ; T1,3 ou I1 ;3 ; T2,1 ou 12,1 ; T2,2 ou 12,2 ; T2,3 ou I2 3 ; T3,1 ou 13,1 ; T3,2 ou 13,2 ; T3,3 ou 13 ;3.

Bien évidemment, d'autres configurations permettant un tel basculement de l'alimentation électrique sont possibles.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle de turboréacteur avec une source d'alimentation électrique (113), un système d'actionnement et de commande d'un dispositif d'inversion de poussée (121), un système d'actionnement et de commande d'un dispositif de tuyère variable (120) et un calculateur (103), **caractérisé en ce que** l'alimentation électrique est commutable entre une première position dans laquelle elle alimente le système d'actionnement et de commande de l'inverseur et un deuxième position dans laquelle elle alimente le système d'actionnement et de commande de la tuyère variable, la commutation s'effectuant sous l'action d'une sortie de commande du calculateur (103) apte à recevoir une commande d'ouverture (100) de l'inverseur de poussée.

2. Nacelle selon la revendication 1, **caractérisée en ce qu'**en l'absence d'une commande d'ouverture d'inversion de poussée et d'une sortie correspondante du calculateur (103), l'alimentation électrique (113) est dirigée vers le système d'actionnement et de commande de la tuyère variable (120).

3. Nacelle selon l'une quelconque des revendications 1 ou 2, **caractérisé en ce que** le calculateur (103) est apte à recevoir des données représentatives de la phase de fonctionnement de l'avion du type poids s'exerçant sur les roues ou donnée altimétrique, par exemple.

4. Nacelle selon l'une quelconque des revendications 1 à 3 avec un deuxième calculateur (102), **caractérisé en ce que** le système d'actionnement et de commande d'inversion de poussée (121) comprend au moins deux verrous primaires (50) associés à au moins une unité de commande (115) apte à commander le déverrouillage des verrous primaires lorsque l'alimentation électrique (113) est dirigée vers le système de d'actionnement et de commande de l'inverseur de poussée et lorsqu'il reçoit un ordre d'ouverture (112) correspondant en provenance du deuxième calculateur (102) apte à recevoir une commande d'ouverture (100) de l'inverseur de poussée.

5. Nacelle selon la revendication 4, **caractérisé en ce que** le deuxième calculateur (102) est un calculateur apte à recevoir des données représentatives du fonctionnement du turboréacteur.

6. Nacelle selon la revendication 5, **caractérisé en ce que** le deuxième calculateur (102) est le FADEC.

7. Nacelle selon l'une quelconque des revendications 1 à 6, **caractérisée en ce que** le système d'actionnement et de commande de l'inverseur de poussée (121) comprend un troisième calculateur (101) distinct apte à recevoir une commande d'ouverture (100) de l'inverseur de poussée et à envoyer une sortie de commande (111) correspondante commandant l'alimentation électrique d'un verrou tertiaire (60) en vue de son déverrouillage.

8. Nacelle selon la revendication 7, **caractérisée en ce que** l'alimentation électrique du verrou tertiaire (60) s'effectue à partir d'une ligne d'alimentation distincte de la source d'alimentation principale (113) des systèmes d'actionnement et de commande de l'inverseur de poussée (121) et de la tuyère variable (120).

9. Nacelle selon l'une quelconque des revendications 1 à 8, **caractérisée en ce que** les systèmes d'actionnement et de commande de l'inverseur de poussée (121) et de la tuyère variable (121) sont principalement logés dans au moins deux boîtiers distincts (117, 118).

10. Nacelle selon l'une quelconque des revendications 1 à 9, **caractérisé en ce que** la source d'alimentation principale (113) des systèmes d'actionnement de la tuyère variable (120) est mise à disposition d'autres fonctions annexes de la nacelles telles que la manoeuvre de capots de maintenance.

11. Nacelle selon l'une quelconque des revendications 1 à 10, **caractérisée en ce qu'**elle comprend deux sources d'alimentation principales (113) aptes à être utilisées de manière sélective en fonction de leur disponibilité vers au moins trois fonctions annexes parmi le système d'actionnement de la tuyère variable (120), de l'inverseur de poussée (121) et des capots de maintenance.

## Claims

1. A turbojet nacelle with an electric power supply source (113), a system for actuating and controlling a thrust inversion device (121), a system for actuating and controlling a variable nozzle device (120) and a computer (103), **characterized in that** the electric power supply may be switched between a first position in which it powers the system for actuating and controlling the inverter, and a second position in which it powers the system for actuating and controlling the variable nozzle, the switching being carried out under the action of a control output of the computer (103) capable of receiving an opening command (100) from the thrust inverter.

2. The nacelle according to claim 1, **characterized in that**, in the absence of a command for opening the thrust inversion and of a corresponding output from the computer (103), the electric power supply (113) is directed towards the system for actuating and controlling the variable nozzle (120).

3. The nacelle according to any of claims 1 to 2, **characterized in that** the computer (103) is capable of receiving data representative of the operating phase of the airplane of the weight type being exerted on the wheels or an altimetric datum for example.

4. The nacelle according to any of claims 1 to 3, with a second computer (102), **characterized in that** the system for actuating and controlling thrust inversion (121) comprises at least two primary locks (50) associated with at least one control unit (115) capable of controlling the unlocking of the primary locks when the electric power supply (113) is directed towards the system for actuating and controlling the thrust inverter, and when it receives a corresponding opening command (112) from the second computer (102) capable of receiving an opening command (100) from the thrust inverter.

5. The nacelle according to claim 4, **characterized in that** the second computer (102) is a computer capable of receiving data representative of the operation of the turbojet.

6. The nacelle according to claim 5, **characterized in that** the second computer (102) is the FADEC.

7. The nacelle according to any of claims 1 to 6, **characterized in that** the system for actuating and controlling the thrust inverter (121) comprises a third distinct computer (101) capable of receiving an opening command (100) from the thrust inverter and of sending a corresponding control output (111) controlling the electric power supply of a tertiary lock (60), with view to its unlocking.

8. The nacelle according to claim 7, **characterized in that** supplying electric power to the tertiary lock (60) is carried out from a distinct power supply line of the main power supply source (113) of the systems for actuating and controlling the thrust inverter (121) and the variable nozzle (120).

9. The nacelle according to any of claims 1 to 8, **characterized in that** the systems for actuating and controlling the thrust inverter (121) and the variable nozzle (120) are mainly housed in at least two distinct housings (117, 118).

10. The nacelle according to any of claims 1 to 9, **characterized in that** the main power supply source (113) of the systems for actuating the variable nozzle (120) is made available to other auxiliary functions of the nacelle, such as the maneuvering of maintenance cowls.

11. The nacelle according to any of claims 1 to 10, **characterized in that** it comprises two main power supply sources (113) which may be used selectively depending on their availability to at least three auxiliary functions among the system for actuating the variable nozzle (120), the thrust inverter (121) and maintenance cowls.

## Patentansprüche

1. Turbotriebwerks-Gondel mit einer elektrischen Versorgungsquelle (113), einem Antriebs- und Steuersystem einer Schubumkehrvorrichtung (121), einem Antriebs- und Steuersystem einer variablen Düsenvorrichtung (120) und einem Rechner (103), **dadurch gekennzeichnet, dass** die elektrische Versorgung zwischen einer ersten Stellung, in der sie das Antriebs- und Steuersystem der Umkehr versorgt, und einer zweiten Stellung, in der sie das Antriebs- und Steuersystem der variablen Düse versorgt, umschaltbar ist, wobei die Umschaltung unter Einwirkung eines Steuerausgangs des Rechners (103) erfolgt, der imstande ist, einen Öffnungsbefehl (100) der Schubumkehr zu erhalten.

2. Gondel nach Anspruch 1, **dadurch gekennzeichnet, dass** die elektrische Versorgung (113) bei Abwesenheit eines Öffnungsbefehls der Schubumkehr und eines entsprechenden Ausgangs des Rechners (103) zum Antriebs- und Steuersystem der variablen Düse (120) gerichtet ist.

3. Gondel nach einem der Ansprüche 1 oder 2, **dadurch gekennzeichnet, dass** der Rechner (103) imstande ist, repräsentative Daten der Funktionsphase des Flugzeugs, beispielsweise vom Typ Gewicht, das auf die Räder wirkt, oder Höhendaten, zu erhalten.

4. Gondel nach einem der Ansprüche 1 bis 3 mit einem zweiten Rechner (102), **dadurch gekennzeichnet, dass** das Antriebs- und Steuersystem der Schubumkehr (121) mindestens zwei primäre Riegel (50) umfasst, die mit mindestens einer Steuereinheit (115) verbunden sind, die imstande ist, die Entriegelung der primären Riegel zu befehlen, wenn die elektrische Versorgung (113) zum Antriebs- und Steuersystem der Schubumkehr gerichtet ist und wenn es einen entsprechenden Öffnungsbefehl (112) vom zweiten Rechner (102) erhält, der imstande ist, einen Öffnungsbefehl (100) von der Schubumkehr zu erhalten.

5. Gondel nach Anspruch 4, **dadurch gekennzeichnet, dass** der zweite Rechner (102) ein Rechner ist, der imstande ist, repräsentative Funktionsdaten des Turbotriebwerks zu erhalten.

6. Gondel nach Anspruch 5, **dadurch gekennzeichnet, dass** der zweite Rechner (102) der FADEC ist.

7. Gondel nach einem der Ansprüche 1 bis 6, **dadurch gekennzeichnet, dass** das Antriebs- und Steuersystem der Schubumkehr (121) einen gesonderten dritten Rechner (101) umfasst, der imstande ist, einen Öffnungsbefehl (100) von der Schubumkehr zu erhalten und einen entsprechenden Steuerausgang (111) zu versenden, der die elektrische Versorgung eines tertiären Riegels (60) zwecks seiner Entriegelung steuert.

8. Gondel nach Anspruch 7, **dadurch gekennzeichnet, dass** die elektrische Versorgung des tertiären Riegels (60) durch eine gesonderte Versorgungsleitung der Hauptversorgungsquelle (113) der Antriebs- und Steuersysteme der Schubumkehr (121) und der variablen Düse (120) erfolgt.

9. Gondel nach einem der Ansprüche 1 bis 8, **dadurch gekennzeichnet, dass** die Antriebs- und Steuersysteme der Schubumkehr (121) und der variablen Düse (121) hauptsächlich in mindestens zwei unterschiedlichen Gehäusen (117, 118) untergebracht sind.

10. Gondel nach einem der Ansprüche 1 bis 9, **dadurch gekennzeichnet, dass** die Hauptversorgungsquelle (113) der Antriebssysteme der variablen Düse (120) weiteren Nebenfunktionen der Gondel, wie der Bewegung von Wartungsklappen, zur Verfügung gestellt wird.

11. Gondel nach einem der Ansprüche 1 bis 10, **dadurch gekennzeichnet, dass** sie zwei Hauptversorgungsquellen (113) umfasst, die imstande sind, in Abhängigkeit ihrer Verfügbarkeit selektiv für mindestens drei Nebenfunktionen des Antriebssystems der variablen Düse (120), der Schubumkehr (121) und der Wartungsklappen verwendet zu werden.
